(19) **Europäisches Patentamt**

**European Patent Office**

**Office européen des brevets**

(11) **EP 0 669 518 B1**

(12) **EUROPÄISCHE PATENTSCHRIFT**

(45) Veröffentlichungstag und Bekanntmachung des Hinweises auf die Patenterteilung:
**19.01.2000 Patentblatt 2000/03**

(51) Int Cl.⁷: **G01D 5/36**, G01D 5/38, G02B 5/18

(21) Anmeldenummer: **95102328.2**

(22) Anmeldetag: **20.02.1995**

(54) **Vorrichtung zum Erzeugen von positionsabhängigen Signalen**

Device to generate position dependant signals

Dispositif pour générer des signaux dépendants de la position

(84) Benannte Vertragsstaaten:
**AT CH DE FR GB IT LI**

(30) Priorität: **23.02.1994 DE 4405843**
**07.09.1994 DE 4431899**

(43) Veröffentlichungstag der Anmeldung:
**30.08.1995 Patentblatt 1995/35**

(73) Patentinhaber: **Dr. Johannes Heidenhain GmbH**
**83292 Traunreut (DE)**

(72) Erfinder:
• **Holzapfel, Wolfgang, Dr.**
**D-83119 Obing (DE)**
• **Huber, Walter**
**D-83278 Traunstein (DE)**

(56) Entgegenhaltungen:
**EP-A- 0 160 811     EP-A- 0 363 620**
**EP-A- 0 513 427**

## Beschreibung

Die Erfindung bezieht sich auf eine Vorrichtung zum Erzeugen von positionsabhängigen Signalen.

In der DE 34 16 864-C2 wird eine Referenzmarke beschrieben, deren Teilungsmarkierungen auf dem Maßstab als transversale Phasengitter ausgebildet sind. Takt- und Gegentaktsignal lassen sich aus einem Referenzmarkenfeld ableiten.

In SU 1292181 A1 wird eine ähnliche Vorrichtung beschrieben, bei der eine codierte Maßstabteilung abgetastet wird, deren Teilungsmarkierungen in Form von transversalen Phasengittern ausgebildet sind. Die Gitterkonstanten dieser transversalen Phasengitter einzelner Teilungsmarkierungen sind unterschiedlich, so daß das auftreffende Licht in unterschiedliche Richtungen abgelenkt und von verschiedenen Photoelementen erfaßt wird. Die transversalen Phasengitter sind nichtperiodisch ausgebildet, um das auftreffende kollimierte Licht in einer bestimmten Richtung zu fokussieren.

Beiden genannten Schriften ist gemeinsam, daß das von der Lichtquelle ausgehende Strahlenbündel nur einmal mit den transversalen Phasengittern des Maßstabes wechselwirkt. Das Strahlenbündel wird dabei transversal in verschiedene Teilstrahlenbündel aufgespalten, die im weiteren Strahlenverlauf nicht mehr überlagert werden. Um eine nennenswerte transversale Aufspaltung dieser Teilstrahlenbündel zu erreichen, muß die Gitterkonstante der transversalen Phasenteilungen sehr klein sein. Dies ist vor allem deshalb ungünstig, weil dieses feine transversale Phasengitter auf dem Maßstab aufgebracht werden muß, der auch größere Abmessungen annehmen kann, so daß hohe Anforderungen an die Herstellungsverfahren gestellt werden müssen und die Herstellungskosten erheblich steigen.

Weiterhin ist festzustellen, daß die in der DE 34 16 864-C2 beschriebene Referenzmarke auf dem Prinzip des Schattenwurfes beruht. Kurze Impulse lassen sich deshalb nur in einem sehr kleinen Abtastabstand generieren.

Die EP 0 363 620-B1 zeigt, daß kurze Referenzimpulse durch zwei leicht verschobene Referenzmarkenfelder mit einer Schattenwurf-Abtastung erzeugt werden. Die Trennung der Strahlenbündel der Referenzimpuls-Eintaktsignale untereinander und der Inkrementalsignale erfordern bestimmte optische Konfigurationen die zu großen Abmessungen des Abtastkopfes führen. Außerdem sind mindestens drei Fotoelemente und entsprechend viele elektrische Signalleitungen allein für die Referenzmarke erforderlich.

Gemäß der EP 0 513 427-A1 wird mit Hilfe von gechirpten Teilungen und einer interferentiellen Abtastung ein kurzer Referenzimpuls in einem großen Abtastabstand erzeugt. Das Abtastprinzip erfordert die Trennung der aus der Teilungsanordnung austretenden resultierenden Beugungsordnungen auf verschiedene Fotoelemente. Sollen breitere Referenzimpulse erzeugt werden, so benötigt man größere lokale Teilungsperioden der gechirpten Teilungen und zur Trennung der Beugungsordnungen dementsprechend längere Linsenbrennweiten. Eine kleine Bauform des Abtastkopfes ist dann ebenfalls nicht realisierbar.

In der DE 42 12 281-C2 ist eine interferentielle Referenzmarke beschrieben, die aufgrund der Verwendung einer Amplitudenabtastteilung anstelle einer Phasenteilung keine Trennung von resultierenden Beugungsordnungen mehr benötigt. Auf diese Weise lassen sich Referenzimpulse mit einer Breite auch größer als ca. 1μm bei kleiner Bauform generieren. Die Abtastung mit einer Amplitudenstruktur verringert allerdings den Nutzanteil des Referenzimpulses, so daß nur eine gleichzeitige Erzeugung von Takt- und Gegentaktsignalen aus einem Teilungsfeld eine ausreichende Störunempfindlichkeit gewährleisten würde. Eine solche Einfeld-Gegentakt-Abtastung ist aber bei der beschriebenen Referenzmarke nicht möglich.

Aufgabe der Erfindung ist es, eine Vorrichtung zum Erzeugen von positionsabhängigen Signalen, also von inkrementalen, codierten oder Referenzsignalen anzugeben, die störunempfindlich ist und sich gleichzeitig einfach und in kleiner Bauform realisieren läßt.

Die Erfindung löst die gestellte Aufgabe mit den Merkmalen des Anspruches 1.

Ein Vorteil der Erfindung liegt darin, daß die transversalen Phasengitter, die aufgrund ihrer kleinen Gitterkonstante hohe Anforderungen an die photolithographische Kopie stellen, nicht auf den Maßstab, sondern auf die wesentlich kleinere Abtastplatte aufgebracht werden müssen. Da die erfindungsgemäße Meßvorrichtung nach dem Auflichtprinzip arbeiten kann, bei dem die Strahlenbündel die Abtastplatte zweimal durchlaufen, werden durch die Erfindungsmerkmale Meßsignale erhalten, die nicht oder innerhalb des zulässigen Bereiches nur geringfügig vom Abtastabstand abhängen.

Ein weiterer Vorteil der Erfindung liegt darin, daß die Teilungsmarkierungen auf der Abtastplatte als auch auf dem Maßstab durch eine Phasenstruktur realisiert werden kann. Insbesondere die Ausbildung als Referenzmarke oder codierte Meßvorrichtung läßt sich damit besonders einfach zusammen mit den Phasenstrukturen eines inkrementalen Meßgerätes herstellen. Es sind dabei nicht mehr zusätzliche Kopierschritte mit hoher Positioniergenauigkeit erforderlich.

Mit Hilfe von Ausführungsbeispielen wird die Erfindung anhand der Zeichnungen noch näher erläutert.

Es zeigt

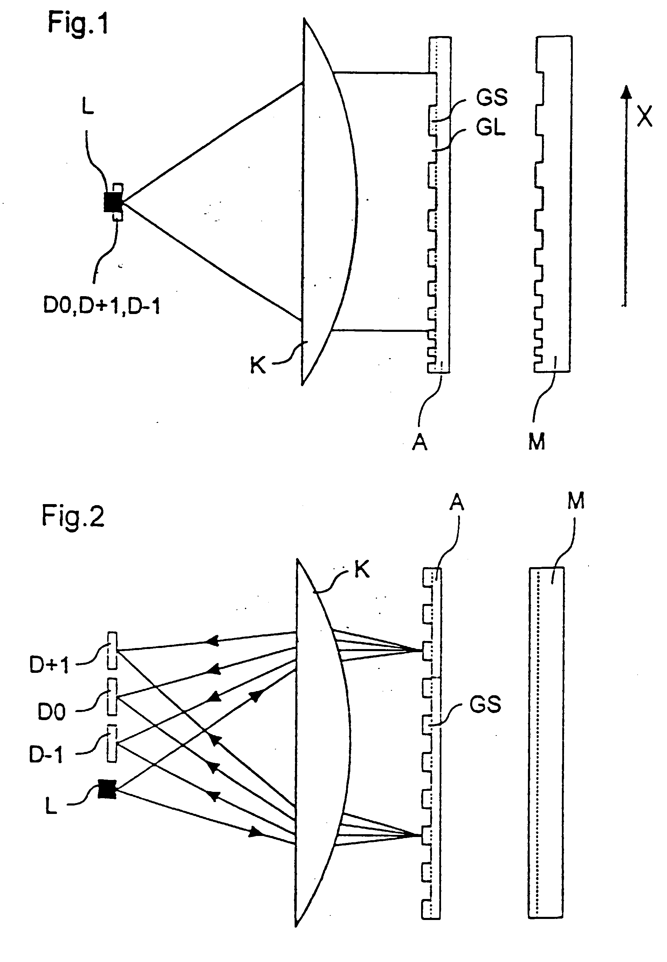

Figur 1                eine schematisch dargestellte Meßvorrichtung;

| Figur 2 | eine um 90° verdrehte Ansicht einer Meßvorrichtung gemäß Figur 1; |
|---|---|
| Figur 3 | Abtastplatte und Meßteilung einer Meßvorrichtung; |
| Figur 4 | eine Variante von Figur 3; |
| Figur 5 | eine schematisch dargestellte inkrementale Meßvorrichtung; |
| Figur 6 | eine um 90° verdrehte Meßvorrichtung gemäß Figur 5; |
| Figur 7 | eine Abtastplatte für eine in |
| Figur 8 | gezeigte Meßteilung; |
| Figur 9 | eine Variante einer Abtastplatte; |
| Figur 10a bis 10d | verschiedene Strahlengänge; |
| Figur 11 | ein Optik-Schema; |
| Figur 12 | Intensitätsverlauf in der Brennebene; |
| Figur 13 | einen Ausschnitt eines Maßstabes und einer Abtastplatte zum Abgleich eines Referenzmarkensignals; |
| Figur 14 | einen Signalverlauf des Takt-und Gegentaktsignals zur Erzeugung eines Referenzimpulses; |
| Figur 15 | Signalverläufe zur Erzeugung des Taktsignales gemäß Figur 14; |
| Figur 16 | Signalverläufe zur Erzeugung des Gegentaktsignales gemäß Figur 14 und |
| Figur 17 | einen weiteren Maßstab und eine weitere Abtastplatte zum Abgleich. |

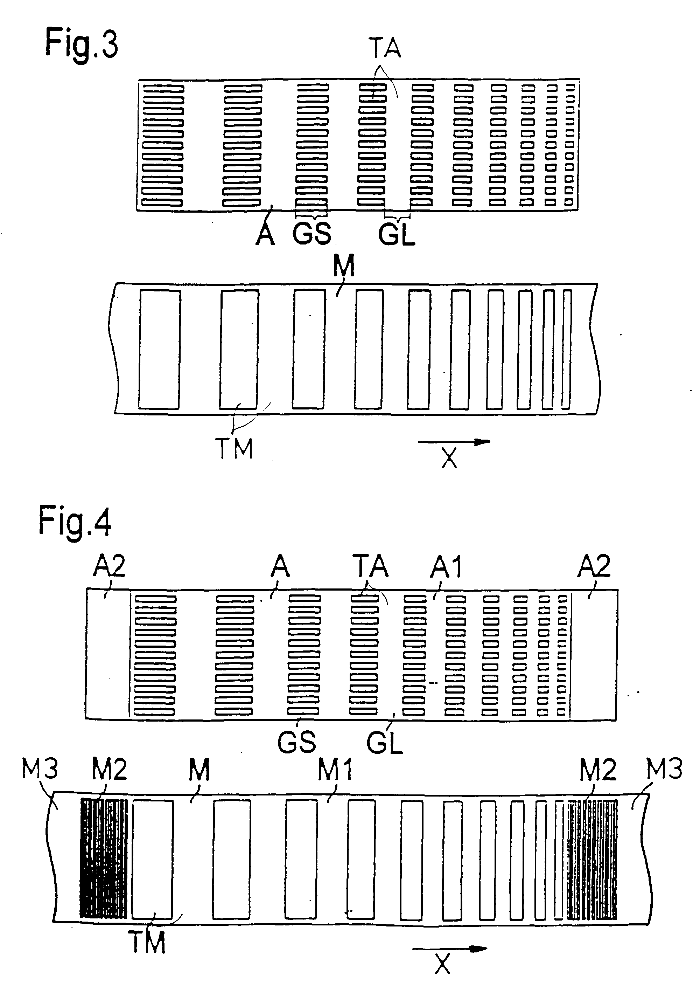

Figur 1 zeigt schematisch eine inkrementale Meßvorrichtung mit einer Referenzmarkenanordnung. Das Licht einer Lichtquelle L wird durch eine Linse K kollimiert und beleuchtet eine Anordnung bestehend aus einer Abtastplatte A und einem reflektierenden Maßstab M. Die Abtastplatte A wird zweimal durchlaufen. Die Kollimatorlinse K lenkt das austretende Lichtbündel auf mehrere Fotoelemente $D0$, $D\pm1$, die ein Takt- bzw. ein Gegentaktsignal liefern. Der Maßstab M trägt gemäß Figur 3 und 4 eine gechirpte Phasenteilung TM mit in Meßrichtung X abwechselnd angeordneten reflektierenden und nicht reflektierenden Stegen, welche senkrecht zur Meßrichtung X verlaufen. Die Teilung TA der Abtastplatte A besteht aus einer in Meßrichtung X gechirpten Phasenstruktur, die sich zusammensetzt aus transparenten Lücken GL und strukturierten Stegen GS, wobei sich die Breite und der Abstand der Stege GS stetig in Meßrichtung ändert. Die strukturierten Stege GS sind streifenförmige, periodische Phasengitter, deren Stege zumindest weitgehend parallel zur Meßrichtung verlaufen. Jeder dieser Gitterstreifen GS lenkt das Licht in verschiedene "transversale" Beugungsordnungen zumindest weitgehend senkrecht zur Meßrichtung ab. Sie sind so ausgebildet, daß die nullte transversale Beugungsordnung des Gitterstreifens unterdrückt wird. Die Wirkung dieser Abtaststruktur läßt sich am einfachsten verstehen, wenn man nacheinander die Richtungen der durch die Abtastplatte A hindurchgehenden bzw. quer zur Meßrichtung X abgelenkten Lichtbündel im Fernfeld, d.h. die in verschiedene transversale Beugungsordnungen abgelenkten Lichtbündel betrachtet: In nullter transversaler Beugungsordnung tritt Licht durch die Lücken GL, nicht aber durch die strukturierten Stege GS. Die Abtaststruktur erscheint deshalb als gechirpte Amplitudenteilung mit transparenten Lükken GL und opaken Stegen GS. Betrachtet man in $\pm1$. transversaler Beugungsordnung, so erhält man kein Licht mehr von den Lücken GL, dafür aber Licht von den Stegen GS. Die Abtaststruktur erscheint als inverse gechirpte Amplitudenteilung mit opaken Lükken GL und transparenten Stegen GS. Anstelle der transparenten Lücken GL können auch transversale Gitterstreifen, deren Stege ebenfalls parallel zur Meßrichtung verlaufen Verwendung finden, wobei sich die Teilungsperiode des Gitters im Bereich GS von der Teilungsperiode des Gitters im Bereich GL unterscheidet.

Im folgenden werden die Strahlenbündel, die beim ersten Durchgang durch die Abtastplatte A in n-ter und beim zweiten Durchgang in m-ter transversaler Beugungsordnung abgelenkt werden als n/m-Strahlenbündel bezeichnet. Das 0/0-Strahlenbündel tritt in nullter resultierender Beugungsordnung aus der Teilungsanordnung aus und trifft auf das Fotoelement D0. Dieses Strahlenbündel "sieht" bei beiden Durchgängen die Abtaststruktur als reguläre (d.h. nicht inverse) Amplitudenteilung und erzeugt einen entsprechenden Signalanteil. Insbesondere bestimmen die Stegkantenpositionen der gechirpten Teilungen den Signalverlauf dieses Signalanteils und können beispielsweise so gewählt werden, daß ein Takt oder ein Gegentaktsignalanteil erzeugt wird. Diese Maßnahme ist an sich in der EP 0 513 427-A1 erläutert, worauf ausdrücklich Bezug genommen wird, so daß sich hierzu weitere Ausführungen erübrigen.

Das +1/-1 - und das -1/+1 - Strahlenbündel tritt ebenfalls in nullter resultierender Beugungsordnung aus und wird auf das Fotoelement D0 gelenkt. In diesen Fällen wirkt die Abtaststruktur zweimal als inverse Amplitudenteilung. Bei einer lokalen Betrachtung entspricht der Übergang von einer regulären zu einer inversen Amplitudenteilung einer Verschiebung der Abtastplatte A um eine halbe Teilungsperiode. Beim hier vorliegenden interferentiellen Abtastprinzip (Überlagerung einer +1. und einer -1. Beugungsordnung des Maßstabs M d.h. Beugung in Meßrichtung X; eine Teilungsperiode = zwei Signalperioden) führt eine solche Verschiebung zu einer Phasenänderung des Signals um 360° d.h. zur ursprünglichen Phasenlage. Der Übergang zu einer inversen Amplitudenteilung ändert deshalb nicht die Signalform, so daß das +1/-1 und das -1/+1 - Strahlenbündel ebenso moduliert sind wie das 0/0 - Strahlenbündel. Das gleiche gilt für alle anderen, auf D0 gelangenden n/-n - Strahlenbündel, die ebenfalls in nullter resultierender Beugungsordnung, also senkrecht zur Abtastplatte A austreten.

Das $\pm 1/0$ und das $0/\pm 1$ Strahlenbündel tritt in $\pm 1$. resultierender Beugungsordnung aus und gelangt auf die Fotoelemente D$\pm 1$. Bei diesen Strahlenbündeln wirkt die Abtaststruktur einmal als reguläre und einmal als inverse Amplitudenteilung. Der Signalverlauf der zugehörigen Signalanteile von D+1 und D-1 ist aus Symmetriegründen identisch. Eine genauere Analyse zeigt, daß diese Signalanteile invers zu dem Signal des Fotoelements D0 moduliert sind. Liefert das Fotoelement D0 beispielsweise ein Taktsignal (Gegentaktsignal), so erhält man über D+1 oder auch D-1 ein zugehöriges Gegentaktsignal (Taktsignal). Man erhält somit die gewünschte Einfeld-Gegentakt-Abtastung.

Unter Berücksichtigung aller beliebigen n/m -Strahlenbündel erweist es sich als besonders günstig, alle geraden transversalen Beugungsordnungen der strukturierten Stege GS zu unterdrücken, indem diese beispielsweise als Stufengitter mit gleichen Steg- und Lückenbreiten sowie einer Phasentiefe von 180° ausgebildet sind. Außerdem ist es vorteilhaft, die lokale Breite der Stege GS und der Lücken GL der gechirpten Teilung gleich zu wählen.

Arbeitet die Meßvorrichtung nach dem beschriebenen interferentiellen Abtastverfahren bei dem in Meßrichtung X symmetrisch gebeugten Strahlen $\pm$ n-ter Ordnung, vorzugsweise $\pm$ 1. Ordnung miteinander interferieren, ist es weiterhin vorteilhaft, daß der Maßstab M so ausgebildet ist, daß die nullte Beugungsordnung unterdrückt wird.

Die Strahlenbündel, die beim ersten Durchgang durch die Abtastplatte A in verschiedene transversale Beugungsordnungen aufgespalten werden, überlagern sich beim zweiten Durchgang jeweils in den einzelnen resultierenden Beugungsordnungen. Diese Überlagerung muß inkohärent erfolgen, da bei einer kohärenten Überlagerung die unterschiedlichen optischen Weglängen zu einer starken Abhängigkeit der Signalform vom Abtastabstand führen würden. Eine inkohärente Überlagerung bedeutet dabei nicht, daß die einzelnen Teilstrahlenbündel, die überlagert werden, nicht mehr interferieren dürfen. Es kann ebenso über eine Mittelung vieler verschiedener Weglängenunterschiede der miteinander interferierenden Teilstrahlenbündel erreicht werden, so daß in der Summe der von der Lichtquelle ausgehenden und von jedem der Fotoelemente erfaßten Strahlenbündel keine einheitliche konstruktive oder destruktive Interferenz mehr auftritt, d.h. eine inkohärente Überlagerung der Summe der Teilstrahlenbündel erreicht wird. Die Erzeugung verschiedener Weglängenunterschiede d.h. die inkohärente Überlagerung kann durch verschiedene Maßnahmen erzielt werden, wobei es unerheblich ist, ob es sich um eine Meßvorrichtung mit inkrementalen, codierten oder Referenzsignalen handelt.

Eine inkohärente Überlagerung gleicher resultierender Beugungsordnungen wird dadurch erreicht, daß die beim ersten Durchgang durch die Abtastplatte A eines einzigen Beleuchtungs-Teilstrahlenbündels transversal gebeugten Teilstrahlenbündel nach dem zweiten Durchgang durch die Abtastplatte A in mehrere gleiche resultierende Beugungsordnungen (bezogen auf die Richtung) aufgespalten werden, wobei diese resultierenden Beugungsordnungen nicht miteinander interferieren können. Dies wird erreicht, indem die Lichtquelle L ein breites Wellenlängenspektrum und eine kurze Kohärenzlänge aufweist.

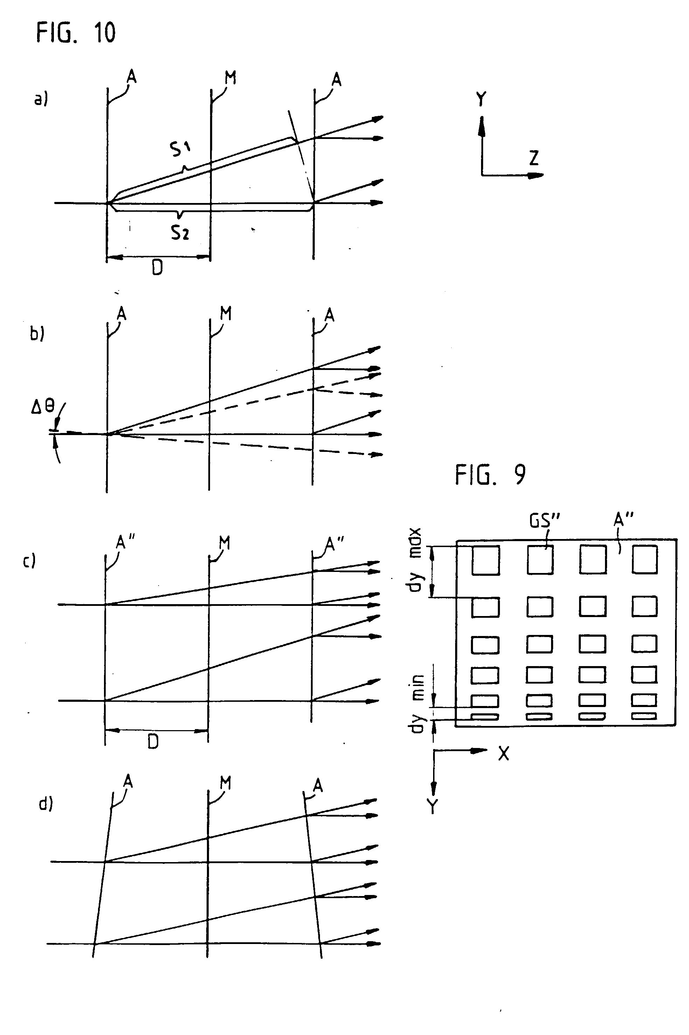

Der Abtastabstand D, d.h. der Abstand zwischen der Abtastplatte A und dem Maßstab M wird demnach in Figur 10a so groß gewählt, daß der Weglängenunterschied $S_2 - S_1$ größer als die Kohärenzlänge der Lichtquelle L wird und die beim ersten Durchgang durch die Abtastplatte A in verschiedene transversale Beugungsordnungen aufgespaltenen Strahlenbündel, die beim zweiten Durchgang durch die Abtastplatte A überlagert werden, nicht miteinander interferieren können. Wenn keine weiteren Maßnahmen kombiniert werden, so muß der Abtastabstand D in Abhängigkeit der transversalen Gitterkonstante $d_y$ und der spektralen Breite $\Delta\lambda$ der Lichtquelle L nach folgender Bedingung gewählt werden:

$$D > 0{,}3 \cdot \frac{d_y^{\,2}}{\Delta\lambda}$$

Eine weitere Möglichkeit der inkohärenten Überlagerung besteht darin, daß die resultierenden Beugungsordnungen eines einzigen Beleuchtungs-Teilstrahlenbündels zwar miteinander interferieren dürfen, aber über den Mittelungseffekt mehrerer derartiger Interferenzen in der Summe die Kohärenz zerstört wird. Vorgesehen sind hier Maßnahmen, durch die mehrere Beleuchtungs-Teilstahlenbündel verschiedene Weglängendifferenzen erzeugen, wie nachfolgend ausführlich erläutert.

Eine inkohärente Überlagerung kann besonders vorteilhaft erreicht werden durch eine senkrecht zur Meßrichtung X (d.h. in y-Richtung) räumlich ausgedehnte Lichtquelle L und/oder mit einem breiten Wellenlängenspektrum d.h. mit einer kurzen Kohärenzlänge. Als eine solche räumlich und zeitlich inkohärente Lichtquelle kann vorzugsweise eine LED verwendet werden, die bezogen auf die lichtemittierende Fläche einen senkrecht zur Meßrichung X länglichen Querschnitt aufweisen kann.

Auch durch unterschiedliche Einfallsrichtungen $\Delta\Theta$ (in y-Richtung) eines Teilstrahlenbündels gemäß Figur 10b kann die Interferenz der oben genannten Teil-Strahlenbündel zerstört werden. Bei entsprechender Divergenz mitteln sich die abstandsabhängigen Interferenzterme zu einem konstanten Wert. Diese Divergenz kann bei einer räumlich ausgedehnten Lichtquelle L über eine entsprechend kurze Brennweite des Kollimators K erreicht werden. Entscheidend ist das Verhältnis von der Ausdehnung der Lichtquelle L in y-Richtung zur Brennweite des Kollimators K; dieses Verhältnis soll möglichst groß sein. Sie kann aber auch durch einen zumindest in y-Richtung konvergenten oder divergenten Beleuchtungsstrahlengang mit Hilfe z.B. einer astigmatischen Beleuchtungsoptik erzeugt werden. Eine in y-Richtung fokussierende Zylinderlinse, die vor der 1. Abtastplatte angeordnet ist, ist besonders vorteilhaft, sie bewirkt eine große Divergenz (Neigung) der auftreffenden Strahlen in y-Richtung.

Eine ähnliche Wirkung wie mit Zylinderlinsen läßt sich durch ein gechirptes Transversalgitter A'' gemäß Figur 9 erzielen. In Figur 10c entsteht durch die unterschiedlichen Ablenkwinkel des gechirpten Transversalgitters A'' in y-Richtung nach dem 1. Durchgang durch die Abtastteilung A'' ein in y-Rich-tung aufgefächertes Strahlenbündel (in 1. transversaler Beugungsordnung), so daß ebenfalls eine Mittelung auftritt. Die minimale ($d_y$min) und die maximale ($d_y$max) lokale transversale Gitterperiode müssen bei kollimierter Beleuchtung der Bedingung genügen:

$$\frac{1}{d_y^2\min} - \frac{1}{d_y^2\max} \geq \frac{2}{D\cdot\lambda}$$

mit (D:Abtastabstand, $\lambda$:Wellenlänge)

Wird die transversale Gitterstruktur wie eine Fresnel-Zylinderlinse (Fresnelzonenplatte) ausgebildet, so läßt sich die abbildende Wirkung ausnutzen, indem beispielsweise die Bildfeldwölbung der Kollimatorlinse kompensiert wird.

Die Abtastplatte A kann gemäß Figur 10d gegenüber dem Maßstab gekippt werden (Kippachse = Teilungsrichtung = x-Richtung). Abhängig von der Höhe des einfallenden Strahlenbündels (in y-Richtung) ergibt sich ein verschiedener Weglängenunterschied der in transversaler Richtung aufgespaltenen Teilstrahlenbündel, so daß ebenfalls die gewünschte Mittelung auftritt.

Die oben erwähnte Figur 9 zeigt eine Variation der Abtastplatte A'', bei der die Teilungsmarkierungen GS'' in Meßrichtung X periodisch angeordnet sind, bei der aber in transversaler Richtung Y eine Beugungsstruktur vorgesehen ist, deren lokale Teilungsperiode sich mit dem Ort stetig ändert. Die Abtastplatte A'' ist also in Meßrichtung X periodisch, in transversaler Richtung Y aber "gechirpt". Sie kann aber zusätzlich auch noch in Meßrichtung X gechirpt ausgebildet sein.

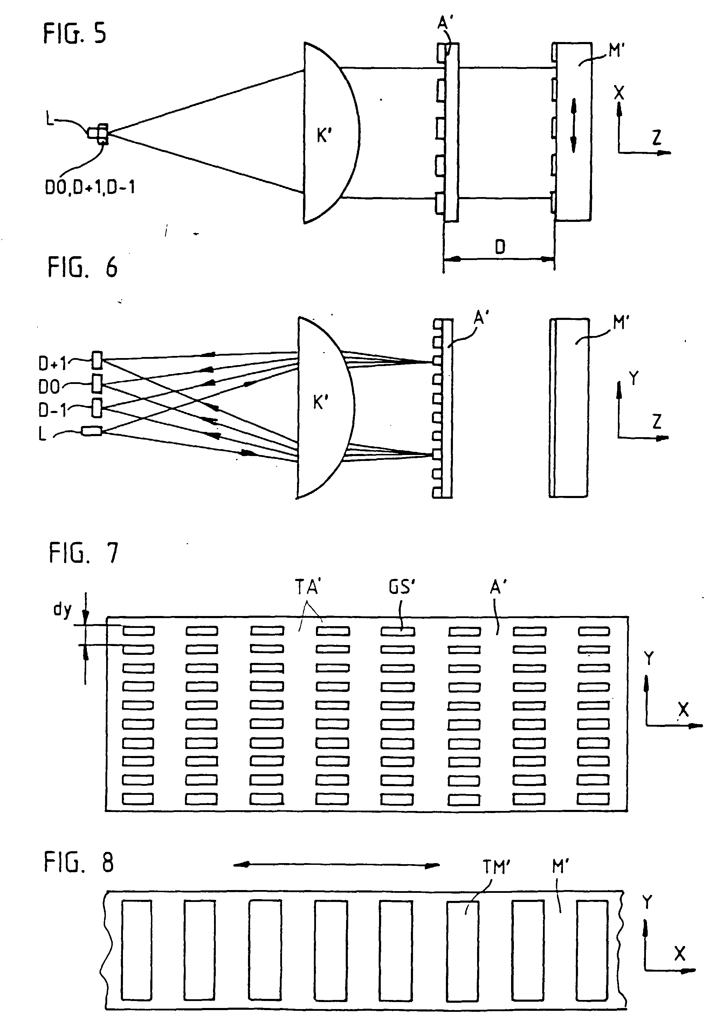

In den Figuren 5 bis 8 ist eine inkrementale Meßvorrichtung schematisch dargestellt, die auf dem vorbeschriebenen Prinzip hinsichtlich der Kohärenz beruht. Lichtquelle L und Detektoren D0, D+1, D-1 entsprechen dabei denen, die zu Figuren 1 und 2 beschrieben wurden.

Die Abtastplatte A' weist dabei Teilungsmarkierungen auf, die transversal zur Meßrichtung X als Phasengitter ausgebildet sind. Der Abstand der Beugungselemente GS' gemäß Figur 7 ändert sich in Meßrichtung X nicht stetig mit dem Ort, wie etwa bei dem Ausführungsbeispiel gemäß der Figuren 3 und 4, die speziell eine Referenzmarke betreffen.

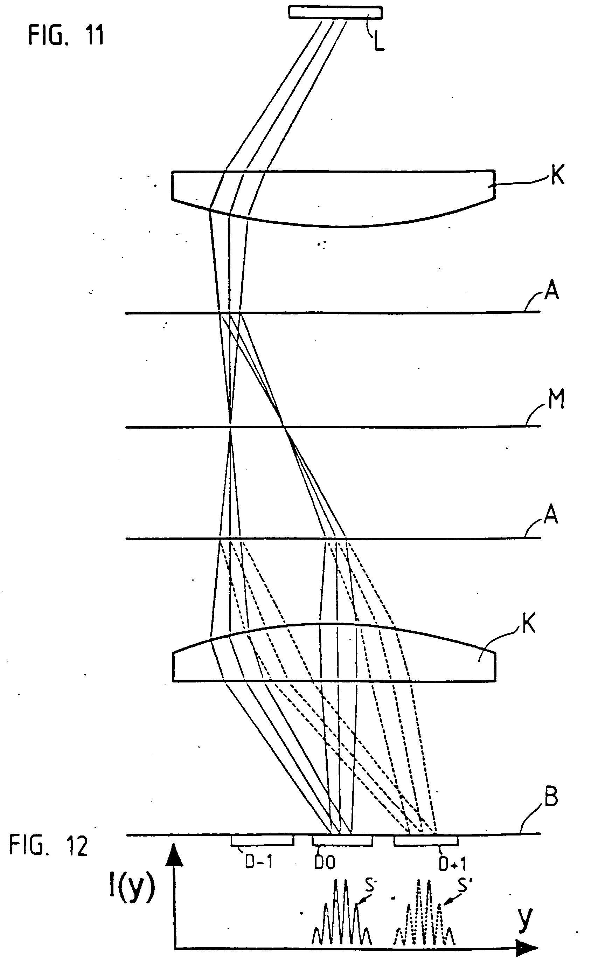

Die Figur 11 zeigt eine Meßvorrichtung zur besonderen Erläuterung der Zerstörung der kohärenten Überlagerung, also der Erzielung der inkohärenten Überlagerung, wie insbesondere in Zusammenhang mit Figur 10b erwähnt.

Jeder Lichtquellenpunkt der in y-Richtung (senkrecht zur Meßrichtung X) ausgedehnten Lichtquelle L liefert nach der Kollimation durch die Linse K, K ein Strahlenbündel mit einer definierten, vom Ort des Lichtquellenpunktes abhängigen Strahlneigung relativ zur optischen Achse.

Jedes dieser Strahlenbündel wird beim ersten Durchgang durch die Abtastteilung A in verschiedene transversale Beugungsordnungen aufgespalten. Der Maßstab M hat keinen Einfluß auf die transversalen Strahlneigungen, da er keine beugende Transversalstruktur aufweist. Beim zweiten Durchgang durch die Abtastteilung A werden die verschiedenen transversalen Beugungsordnungen überlagert und in verschiedene resultierende transversale Beugungsordnungen gelenkt. Beim zweiten Durchgang durch die Linse K werden die verschiedenen transversalen Beugungsordnungen aufgespalten. In der Brennebene B entsteht für jede resultierende Beugungsordnung ein Lichtquellenbild.

Die überlagerten transversalen Beugungsordnungen können je nach Gangunterschied konstruktiv oder destruktiv interferieren. Da der Gangunterschied von der Strahlneigung abhängt (Interferenzstreifen gleicher Neigung), erhält man in der Brennebene B der Linse K ein in Figur 12 gezeigtes Streifensystem S, S' innerhalb der einzelnen Lichtquellenbilder.

Bei einer Änderung des Abtastabstandes verschieben sich entweder diese Streifensysteme S, S' oder die Intensitätsmodulation der Streifensysteme oszillieren in ihrer Amplitude, die Streifen bleiben aber am selben Ort. Wird von einem Detektor D0, D+1, D-1 nur ein Bruchteil einer Streifenperiode erfaßt, so erhält man bei Abstandsänderungen in den beiden vorgenannten Fällen Signalschwankungen. Werden vom Detektor D0, D+1, D-1 eine oder mehrere Streifenperioden erfaßt, so erhält man durch Mittelung abstandsunabhängige Signale.

Die Detektoren D0, D+1, D-1 müssen geeignet sein, Teilstrahlenbündel mit transversalen Strahlneigungen $\Delta\Theta$ (gemäß Figur 10b) zu erfassen, die durch die Divergenz $\Theta_{DIV}$ der auf die Abtastplatte A einfallenden Teilstrahlenbündel begrenzt sind, wobei gilt

$$\Theta_{Div} \geq \frac{d_y}{2D}$$

mit $d_y$ : transversale Teilungsperiode, D:Abtastabstand

Um die Interferenz der in Meßrichtung X aufgespaltenen Teilstrahlenbündel zu gewährleisten, müssen sie gleiche Weglängen aufweisen oder die Gitterkonstanten der transversalen Phasenteilung GS ist wesentlich kleiner als die der Teilung TA in Meßrichtung X, so daß der Gangunterschied zwischen Teilstrahlenbündeln gleicher transversaler Beugungsordnungen klein ist, so daß die zeitliche Inkohärenz der Lichtquelle L oder unterschiedlicher Strahlneigungen die Interfenz nicht nennenswert reduzieren können. Dies gilt jedoch nicht für Teilstrahlenbündel unterschiedlicher transversaler Beugungsordnungen.

Die Erfindung ist nicht darauf beschränkt, außer der nullten resultierenden Beugungsordnung die $\pm$ 1. Beugungsordnung zu erfassen. Es können auch Detektoren zur Erfassung anderer oder weiterer resultierender Beugungsodrungen vorgesehen sein.

Bezogen auf die Ausbildung als Referenzmarke gemäß Figur 1 bis 4 sind verschiedene Modifikationen der Teilungsstruktur möglich:

- Die Stegkantenpositionen der in Meßrichtung X gechirpten Teilungen können so gewählt werden, daß das Fotoelement D0 ein Gegentaktsignal und die Fotoelemente D±1 jeweils ein Taktsignal liefern oder umgekehrt.

- Da die Fotoelemente D+1 und D-1 einen identischen Signalverlauf erzeugen, können diese Fotoelemente parallel geschaltet werden. Es kann aber auch auf eines dieser Fotoelemente verzichtet werden.

- Die Ausdehnung der Fotoelemente D0, D+1, D-1 in Meßrichtung X ist mindestens so groß, daß die resultierenden $\pm$1. (longitudinale) Beugungsordnung der gechirpten Teilungen TA, TM auf der Abtastplatte A und dem Maßstab M vollständig, d.h. insbesondere bezüglich der kleinsten lokalen Teilungsperiode, auftrifft und damit ein hoher Signalpegel erreicht wird.

Die Störunempfindlichkeit der Referenzmarke läßt sich weiter verbessern, indem zumindest auf einer Seite der Teilungsmarkierungen M1 des Maßstabes M eine von dieser abweichenden zusätzlichen Teilungsstruktur M2 angebracht ist. Bei der Anordnung nach Figur 4 sind angrenzend an die gechirpten Teilungsfelder A1 und M1, die am Fotoelement D0 ein Gegentaktsignal erzeugen, auf der Abtastplatte A blanke Fensterbereiche A2 und auf dem Maßstab M zugehörige periodische Teilungsfelder M2 angeordnet. In der Nullage wird Licht, das durch die blanken Fensterbereiche A2 auf die periodischen Teilungsfelder M2 gelangt, soweit abgelenkt (kleine Teilungsperiode!), daß es nicht mehr auf das Fotoelement D0 gelangt. Außerhalb der Nullage trifft Licht durch die Fenster A2 auf reflektierende Maßstabsbereiche M3 und somit auf das Fotoelement D0 und vergrößert in diesen Maßstabslagen den Signalabstand von Takt- und Gegentaktsignal.

Das in Differenz geschaltete Takt- und Gegentaktsignal bildet einen störunempfindlichen Referenzimpuls, der aus Stabilitätsgründen am Nullpegel getriggert wird. Fertigungstoleranzen erfordern in der Regel einen Abgleich des Referenzsignales. Insbesondere muß der Gleichspannungsanteil eingestellt werden. In einer Anordnung ähnlich Abb. 4, bei der aber die Fensterbereiche A2 größer sind als die zugehörigen Teilungsfelder M2, kann diese Einstellung durch eine Schraube erfolgen. Die Schraube begrenzt dabei den Strahlengang durch die vergrößerten Fensterbereiche A2 auf die blanken Maßstabsbereiche M3 und bestimmt damit den Gleichlichtpegel des Gegentakt-Fotoelementes D0.

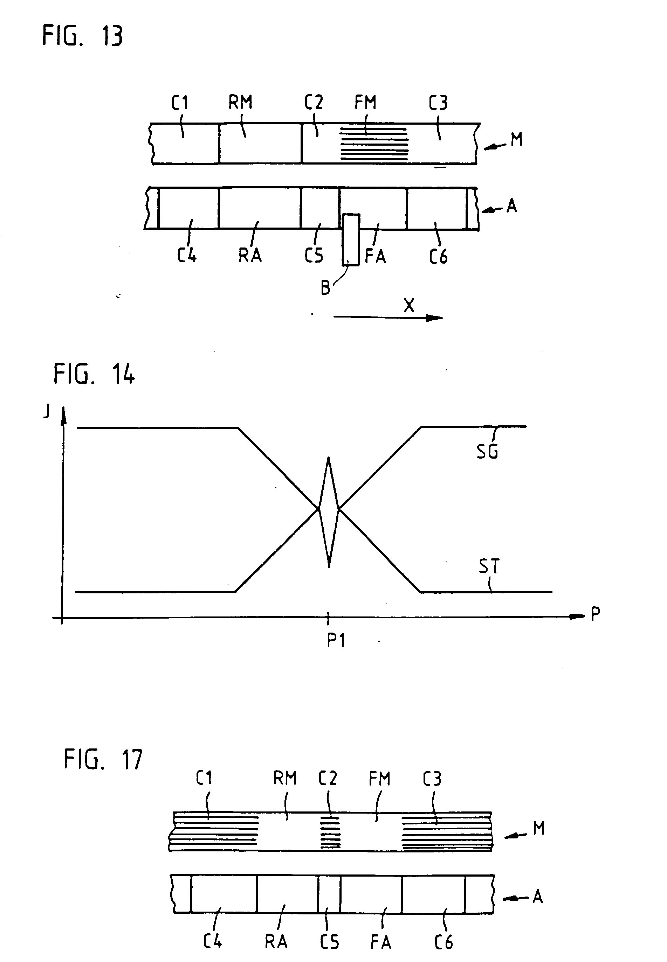

Eine weitere Variante eines derartigen Abgleichs zeigt Figur 13. Gezeigt ist nur ein Ausschnitt eines Maßstabes M und einer Abtastplatte A. Auf dem Maßstab M befindet sich eine an sich bekannte Referenzmarke RM, vorzugsweise wie in Figur 4 dargestellt. In Meßrichtung X davon beabstandet befindet sich ein Teilungsfeld FM, dessen Gitterlinien in Meßrichtung X verlaufen. Die davon benachbarten Bereiche C1, C2, C3 der Oberfläche des Maßstabes M sind reflektierend ausgestaltet, beispielsweise durch Aufbringen einer Chromschicht.

Dem Teilungsfeld FM des Maßstabes M ist ein gleich großes transparentes Feld FA auf der Abtastplatte A zugeordnet. Der Referenzmarke RM des Maßstabes M ist ein auf der Abtastplatte A befindliches Abtastfeld RA zugeordnet, wie beispielsweise in Figur 3 dargestellt. Den Bereichen C1, C2, C3 des Maßstabes M sind auf der Abtastplatte A absorbierende Bereiche C4, C5, C6 zugeordnet.

In der näheren Umgebung des Referenzimpulsmaximums, bei der sich die Referenzmarke RM mit dem Abtastfeld RA sowie das Teilungsfeld FM mit dem Feld FA zumindest weitgehend überdecken, trifft Licht durch das Feld FA auf das Teilungsfeld FM und wird in $\pm$ 1. transversaler Beugungsordnung abgelenkt und gelangt auf die Detektoren D+1, D-1. Dabei weist das Transversalgitter TA die gleichen Gitterparameter wie das Gitter im Bereich FM auf.

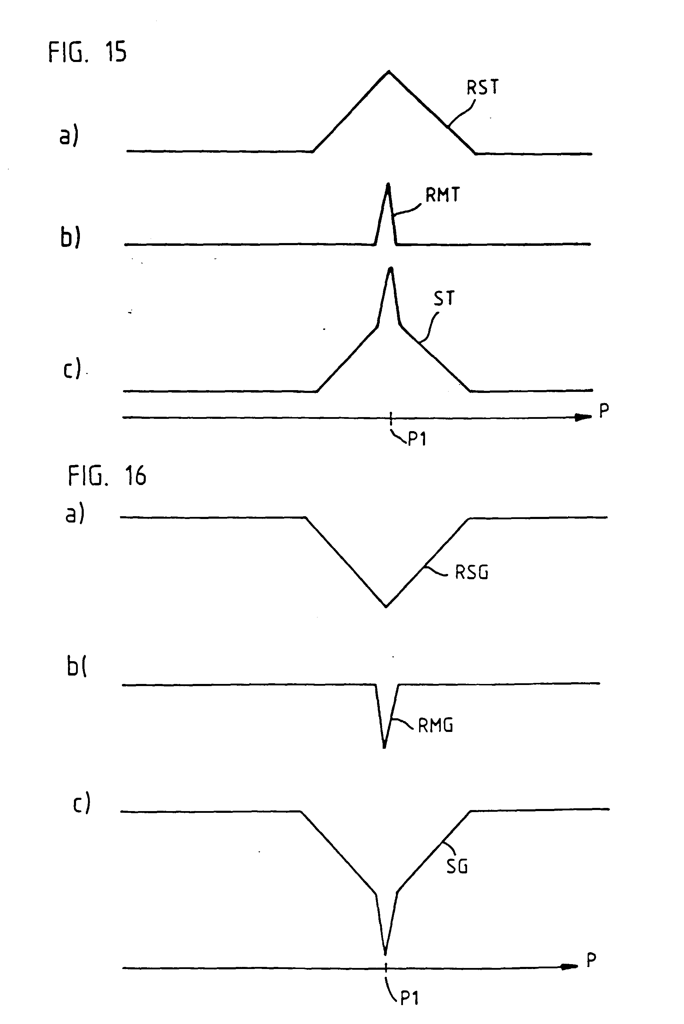

Diese Detektoren D+1, D-1 liefern das in Figur 15a dargestellte Regelsignal-Takt RST mit einem Maximum an dieser Position P1. Durch die Ablenkung des Lichtstrahlenbündels am Teilungsfeld FM weist das vom Detektor D0 erzeugte Regelsignal-Gegentakt RSG gemäß Figur 16a an dieser Position P1 ein Signalminimum auf. Das der Referenzmarke RM zugeordnete Lichtstrahlenbündel erzeugt mit dem Abtastfeld RA Teilstrahlenbündel, die analog der Beschreibung gemäß Figur 1 bis 4 auf die Detektoren D0, D+1, D-1 treffen. Ohne Berücksichtigung der Teilstrahlen, die zu den Signalverläufen gemäß Figur 15a, 16a führen, erhält man vom Detetor D0 das Referenzmarkensignal-Gegentakt RMG und von den Detektoren D+1, D-1 jeweils das Referenzmarkensignal-Takt RMT. Das Referenzmarkensignal-Gegentakt RMG ist in Figur 16b und das Referenzmarkensignal-Takt RMT ist in Figur 15b dargestellt. Durch Überlagerung der Signale RST und RMT auf den Detektoren D+1, D-1 wird das in Figur 15c dargestellte Taktsignal ST als Summensignal erzeugt. Durch Überlagerung der Signale RSG und RMG auf dem Detektor D0 wird das in Figur 16c dargestellte Gegentaktsignal SG als Summensignal erzeugt.

Durch das Zusammenwirken der Felder FA und FM bei der Abtastung wird außerhalb des Überdeckungsbereiches der zugehörigen Felder RM, RA bzw. FM, FA das Regelsignal-Gegentakt RSG angehoben und damit der Abstand der Signalpegel von Taktsignal ST und Gegentaktsignal SG vergrößert. Damit verringert sich die Störempfindlichkeit der Meßvorrichtung. Andererseits wird im Bereich der Überdeckung durch die Wirkung des Regelsignales-Takt RST das Taktsignal ST angehoben. Mittels Schraube oder einer anderen variablen Blende B wird der Strahlengang der durch die Felder FA und FM hindurchtritt partiell abgeblendet, wodurch sich der Referenzimpuls relativ zum Triggerpegel einstellen läßt. Die Schraube oder Blende B kann sich entweder zwischen Kondensor K und der Abtastplatte A oder in dem Bereich zwischen Lichtquelle L und Kondensor K befinden. Diese Ausgestaltung führt also neben dem eigentlichen Referenzimpulsabgleich zu einer Vergrößerung des Störabstandes zwischen Taktsignal ST und Gegentaktsignal SG außerhalb des Referenzimpulsmaximums, wie in Figur 14 dargestellt. Der Signalpegel J ist als Funktion der Position P des Maßstabes M aufgetragen.

In Figur 17 sind auf dem Maßstab M die reflektierenden Bereiche C1, C2, C3 und das Teilungsfeld FM vertauscht. Damit erreicht man einen ähnlich günstigen Signalverlauf wie zu den Figuren 13 bis 16 beschrieben, wenn man die Referenzmarke RM derart ausgestaltet, daß in 0. transversaler Beugungsordnung das Taktsignal ST erzeugt wird. Wie zu Figur 13 beschrieben, kann zum Abgleich eine Blende dem transparenten Feld FA zugeordnet werden.

Gemäß der Erfindung wird also der Abgleich realisiert durch das Zusammenwirken von zusätzlich auf Abtastplatte A und Maßstab M jeweils neben der Referenzmarke RM befindlichen Feldern. Diese Felder können transparent, reflektierend, als Gitter, Prismen, Holografisch-optische Elemente, Diffraktiv-optische Elemente etc. ausgebildet sein, sowohl abbildende als auch nicht abbildende Eigenschaften aufweisen. Ein definiertes Abschatten (verschiebbare Blende oder Schraube) bewirkt eine Regelung des Signalpegels von Taktsignal ST oder Gegentaktsignal SG.

Der Abgleichmechanismus ist nicht auf den Abgleich von Referenzmarkensignalen beschränkt, sondern sinngemäß auch zum Abgleich der analogen Abtastsignale eines erfindungsgemäßen inkrementalen oder codierten Meßsystems einsetzbar.

Die Erfindung ist bei Längen- und Winkelmeßsystemen anwendbar, wobei die Abtastung im Durchlicht oder im Auflicht erfolgen kann.

**Patentansprüche**

1. Vorrichtung zum Erzeugen von positionsabhängigen Signalen, mit einer Lichtquelle (L), einer Maßverkörperung (M, M') und mindestens eine diese abtastende Abtastplatte (A, A', A''), wobei die Maßverkörperung (M, M') eine Amplituden- oder Phasenteilung (TM, TM') aufweist und die mindestens eine Abtastplatte (A, A', A'') eine Phasenteilung (TA) besitzt, die Markierungen (GS) mit einer Phasenteilung aufweist, dadurch gekennzeichnet, daß die Strichrichtungen der Markierungen (GS) auf der mindestens einen Abtastplatte (A,A',A'') in einem Winkel zur Meßrichtung (X) verlaufen, der von neunzig Grad abweicht, und daß die von der zumindest einen Abtastplatte (A, A', A'') transversal aufgespalteten Teilstrahlenbündel von Detektoren (D0, D+1, D-1) zum Erzeugen der positionsabhängigen Signale (ST, SG) erfaßt werden.

2.   Vorrichtung nach Anspruch 1, dadurch gekennzeichnet, daß das Licht der Lichtquelle (L) auf die Abtastplatte (A, A', A''), von der Abtastplatte (A, A', A'') auf die Maßverkörperung (M, M') und von der Maßverkörperung (M, M') auf die Abtastplatte (A, A', A'') oder eine weitere Abtastplatte (A, A', A'') und weiter auf mehrere quer zur Meßrichtung (X) babstandet angeordnete Detektoren (D0, D+1, D-1) gerichtet ist.

3.   Vorrichtung nach Anspruch 2, dadurch gekennzeichnet, daß die nach dem zweiten Durchgang durch die Abtastplatte (A, A', A'') transversal aufgespaltenen Teilstrahlenbündel einander inkohärent überlagern.

4.   Vorrichtung nach Anspruch 3, dadurch gekennzeichnet, daß die Inkohärenz durch eine Lichtquelle (L) mit einem breiten Wellenlängenspektrum und einer kurzen Kohärenzlänge erreicht wird.

5.   Vorrichtung nach Anspruch 4, dadurch gekennzeichnet, daß die Lichtquelle (L) eine LED ist.

6.   Vorrichtung nach Anspruch 4 oder 5, dadurch gekennzeichnet, daß der Abstand (D) zwischen der Abtastplatte (A) und dem Maßstab (M) derart gewählt ist, daß der Weglängenunterschied (S2-S1) der Teilstrahlenbündel größer ist als die Kohärenzlänge der Lichtquelle (L), so daß die beim ersten Durchgang durch die Abtastplatte (A) in verschiedene transversale Beugungsordnungen aufgespaltenen Teilstrahlenbündel, welche bei dem zweiten Durchgang durch die Abtastplatte (A) überlagert werden, nicht miteinander interferieren.

7.   Vorrichtung nach Anspruch 4, dadurch gekennzeichnet, daß der Abtastabstand (D) nach folgende Beziehung von der Gitterkonstanten ($d_y$) der transversalen Phasenteilung (GS) und der spektralen Breite ($\Delta\lambda$) der Lichtquelle (L) abhängt:

$$D > 0,3 \cdot \frac{d_y^{\,2}}{\Delta\lambda}$$

8.   Vorrichtung nach Anspruch 3, dadurch gekennzeichnet, daß die einander überlagerten Teil-strahlenbündel mehrere unterschiedliche Weglängendifferenzen aufweisen.

9.   Vorrichtung nach Anspruch 8, dadurch gekennzeichnet, daß die Beleuchtung der Abtastplatte (A) mit mehreren Teilstrahlenbündeln unterschiedlicher Neigung ($\Delta\,\Theta$) erfolgt.

10.  Vorrichtung nach Anspruch 9, dadurch gekennzeichnet, daß der lichtemittierende Bereich der Lichtquelle (L) senkrecht zur Meßrichtung (X) räumlich ausgedehnt ist.

11.  Vorrichtung nach Anspruch 10, dadurch gekennzeichnet, daß die Lichtquelle (L) einen länglichen Querschnitt sekrecht zur Meßrichtung (X) aufweist.

12.  Vorrichtung nach Anspruch 9, dadurch gekennzeichnet, daß die Beleuchtung der Abtastplatte (A) mit einem senkrecht zur Meßrichtung (X) konvergenten oder divergenten Lichtstrahlenbündel erfolgt.

13.  Vorrichtung nach Anspruch 12, dadurch gekennzeichnet, daß nach der Lichtquelle (L) eine astigmatische Beleuchtungsoptik vorgesehen ist.

14.  Vorrichtung nach Anspruch 9, dadurch gekennzeichnet, daß sich die Teilungsperiode der Markierungen (GS) der Abtastplatte (A'') senkrecht zur Meßrichtung (X) stetig ändert.

15.  Vorrichtung nach Anspruch 9, dadurch gekennzeichnet, daß sich die Teilungsperiode der Markierungen der Abtastplatte senkrecht zur Meßrichtung ändert, und somit die Markierungen eine Fresnel-Zylinderlinse bilden.

16.  Vorrichtung nach Anspruch 9, dadurch gekennzeichnet, daß die Abtastplatte (A) gegenüber der Maßverkörperung (M) gekippt ist, wobei die Kippachse in Meßrichtung (X) verläuft.

**17.** Vorrichtung nach einem der vorhergehenden Ansprüche, dadurch gekennzeichnet, daß die Maßverkörperung (M, M') und/oder die Abtastplatte (A', A") in Meßrichtung (X) eine inkrementale Teilung (TA', TM') aufweist, deren Teilungsperioden jeweils konstant sind.

**18.** Vorrichtung nach einem der Ansprüche 1 bis 16, dadurch gekennzeichnet, daß die Maßverkörperung (M) einen Teilungsbereich (M1) aufweist, dessen Teilungsperiode ortsabhängig in Meßrichtung (X) stetig variiert.

**19.** Vorrichtung nach Anspruch 18, dadurch gekennzeichnet, daß die zumindest eine Abtastplatte (A) einen Teilungsbereich (A1) aufweist, dessen Teilungsperiode ortsabhängig in Meßrichtung (X) stetig variiert.

**20.** Vorrichtung nach einem der vorhergehenden Ansprüche, dadurch gekennzeichnet, daß die Markierungen (GS) der Abtastplatte (A, A', A") derart ausgebildet sind, daß keine nullte transversale Beugungsordnung entsteht.

**21.** Vorrichtung nach einem der vorhergehenden Ansprüche, dadurch gekennzeichnet, daß die Teilung (TM, TM') der Maßverkörperung (M, M') derart ausgebildet ist, daß keine nullte longitudinale Beugungsordnung entsteht.

**22.** Vorrichtung nach einem der vorhergehenden Ansprüche, dadurch gekennzeichnet, daß auf der Abtastplatte (A) und/oder auf dem Maßstab (M) zumindest ein weiteres optisches Element (A2, M2, M3,; FM, FA, C1 bis C6) aufgebracht ist, welches ein von der Lichtquelle (L) ausgehendes Lichtbündel auf zumindest einen der Detektoren (D0, D+1, D-1) richtet und zumindest ein positionsabhängiges Signal (ST, SG) beeinflußt.

**23.** Vorrichtung nach Anspruch 22, dadurch gekennzeichnet, daß dieses Lichtbündel durch eine im Lichtstrahlengang befindliche Blende (B) begrenzt ist.

**Claims**

**1.** Device for producing position-dependent signals, having a light source (L), a material measure (M, M') and at least one scanning plate (A, A', A") scanning the latter, the material measure (M, M') having an amplitude- or phase gradation (TM, TM') and at least one scanning plate (A, A', A") having a phase gradation (TA), which has markings (GS) with a phase gradation, characterised in that the line directions of the markings (GS) on at least one scanning plate (A, A', A") extend at an angle to the measuring direction (X) which diverges from ninety degrees, and in that the partial ray bundles, which are transversely split from at least one scanning plate (A, A', A"), are detected by detectors (D0, D+1, D-1) to produce position-dependent signals (ST, SG).

**2.** Device according to claim 1, characterised in that the light of the light source (L) is directed onto the scanning plate (A, A', A"), from the scanning plate (A, A', A") onto the material measure (M, M') and from the material measure (M, M') onto the scanning plate (A, A', A") or onto a further scanning plate (A, A', A") and further onto several detectors (D0, D+1, D-1) arranged at a spacing transversely to the measuring direction (X).

**3.** Device according to claim 2, characterised in that the partial ray bundles, which are transversely split after the second passage through the scanning plate (A, A', A") , are superimposed upon each other incoherently.

**4.** Device according to claim 3, characterised in that the incoherence is achieved by a light source (L) with a broad wavelength spectrum and a short coherence length.

**5.** Device according to claim 4, characterised in that the light source (L) is an LED.

**6.** Device according to claim 4 or 5, characterised in that the spacing (D) between the scanning plate (A) and the measurer (M) is chosen such that the path-length difference (S2-S1) of the partial ray bundles is greater than the coherence length of the light source (L) so that the partial ray bundles, which are split during the first passage through the scanning plate (A) into different, transverse diffraction orders and which are superimposed during the second passage through the scanning plate (A), do not interfere with each other.

**7.** Device according to claim 4, characterised in that the scanning spacing (D) depends according to the following equation upon the grid constant ($d_y$) of the transverse phase gradation (GS) and the spectral width ($\Delta\lambda$) of the light source (L):

$$D > 0.3 \, d_y^{\,2} / \Delta\lambda$$

**8.** Device according to claim 3, characterised in that the partial ray bundles, which are superimposed upon each other, have several different path-length differences.

**9.** Device according to claim 8, characterised in that the illumination of the scanning plate (A) is effected by several partial ray bundles of different inclination ($\Delta\Theta$).

**10.** Device according to claim 9, characterised in that the light emitting region of the light source (L) extends spatially perpendicularly to the measuring direction (X).

**11.** Device according to claim 10, characterised in that the light source (L) has a longitudinal cross-section perpendicular to the measuring direction (X).

**12.** Device according to claim 9, characterised in that the illumination of the scanning plate (A) is effected by a convergent or divergent light ray bundle which is perpendicular to the measuring direction (X).

**13.** Device according to claim 12, characterised in that astigmatic illumination optics are provided after the light source (L).

**14.** Device according to claim 9, characterised in that the gradation period of the markings (GS) of the scanning plate (A") changes constantly perpendicular to the measuring direction (X).

**15.** Device according to claim 9, characterised in that the gradation period of the markings of the scanning plate changes perpendicular to the measuring direction and hence the markings form a cylindrical Fresnel lens.

**16.** Device according to claim 9, characterised in that the scanning plate (A) is tilted relative to the material mass (M), the tilting axis extending in the measuring direction (X).

**17.** Device according to one of the preceding claims, characterised in that the material measure (M, M') and/or the scanning plate (A', A") has an incremental gradation (TA', TM') in the measuring direction (X), the gradation periods of which gradation are constant respectively.

**18.** Device according to claims 1 to 16, characterised in that the material measure (M) has a gradation region (M1), the gradation period of which varies constantly depending upon the position in the measuring direction (X).

**19.** Device according to claim 18, characterised in that at least the one scanning plate (A) has a gradation region (A1), the gradation period of which varies constantly depending upon the position in the measuring direction (X).

**20.** Device according to one of the preceding claims, characterised in that the markings (GS) of the scanning plate (A, A', A") are configured such that no zero transverse diffraction order appears.

**21.** Device according to one of the preceding claims, characterised in that the gradation (TM, TM') of the material measure (M, M') is configured such that no zero longitudinal diffraction order appears.

**22.** Device according to one of the preceding claims, characterised in that at least one further optical element (A2, M2, M3; FM, FA, C1 to C6) is deposited on the scanning plate (A) and/or the measurer (M), which element directs a light bundle emanating from the light source (L) onto at least one of the detectors (D0, D+1, D-1) and influences at least one position-dependent signal (ST, SG).

**23.** Device according to claim 22, characterised in that this light bundle is delimited by a screen (B) located in the light ray path.

**Revendications**

**1.** Dispositif pour générer des signaux dépendants de la position, comprenant une source lumineuse (L), une mesure matérialisée (M, M') et au moins une plaque de palpage (A, A', A") qui palpe celle-ci, la mesure matérialisée (M, M') comportant une graduation d'amplitude ou une graduation de phase (TM, TM') et la plaque de palpage (A, A', A") au nombre d'au moins une portant une graduation de phase (TA) qui comporte des repères (GS) selon une graduation de phase, caractérisé par le fait que les directions des repères (GS) sur la plaque de palpage (A, A', A"), au nombre d'au moins une, forment un angle différent de 90 degrés avec la direction de mesure (X) et par le fait que le faisceau de rayons partiels divisé transversalement par la plaque de palpage (A, A', A"), au nombre d'au moins une, est détecté par des détecteurs (D0, D+1, D-1) aux fins de générer des signaux (ST, SG) dépendants de la position.

2. Dispositif selon la revendication 1, caractérisé par le fait que la lumière de la source lumineuse (L) arrivant sur la plaque de palpage (A, A', A") est dirigée de la plaque de palpage (A, A', A") sur la mesure matérialisée (M, M') et de la mesure matérialisée (M, M') sur la plaque de palpage (A, A', A") ou sur une autre plaque de palpage (A, A', A"), et de là sur plusieurs détecteurs (D0, D+1, D-1) disposés à distance, transversalement à la direction de mesure (X).

3. Dispositif selon la revendication 2, caractérisé par le fait que les faisceaux de rayons partiels divisés transversalement après le deuxième passage à travers la plaque de palpage (A, A', A"), se superposent de manière non cohérente.

4. Dispositif selon la revendication 3, caractérisé par le fait que la non-cohérence est obtenue par une source lumineuse (L) à large spectre de longueurs d'onde et à faible longueur de cohérence.

5. Dispositif selon la revendication 4, caractérisé par le fait que de la source lumineuse (L) est une diode électroluminescente.

6. Dispositif selon la revendication 4 ou 5, caractérisé par le fait que la distance (D) entre la plaque de palpage (A) et la règle (M) est choisie de telle sorte que la différence de longueur de trajet (S2-S1) des faisceaux de rayons partiels soit supérieure à la longueur de cohérence de la source lumineuse (L), afin que les faisceaux de rayons partiels divisés en plusieurs ordres de diffraction transversale lors du premier passage à travers la plaque de palpage (A), qui sont superposés lors du second passage à travers la plaque de palpage (A), n'interfèrent pas les uns avec les autres.

7. Dispositif selon la revendication 4, caractérisé par le fait que la distance de palpage (D) dépend de la constante de réseau ($d_y$), de la division de phase transversale (GS) et de la largeur de spectre ($\Delta\lambda$) de la source de lumière (L), conformément à la relation :

$$D > 0,3 \cdot \frac{d_y^{\,2}}{\Delta\lambda}$$

8. Dispositif selon la revendication 3, caractérisé par le fait que les faisceaux de rayons partiels superposés les uns aux autres présentent plusieurs différences de longueur de trajet.

9. Dispositif selon la revendication 8, caractérisé par le fait que l'éclairage de la plaque de palpage (A) a lieu à l'aide de plusieurs faisceaux de rayons partiels avec des inclinaisons différentes ($\Delta\Theta$).

10. Dispositif selon la revendication 9, caractérisé par le fait que la zone émettrice de lumière de la source lumineuse (L) est étendue dans l'espace perpendiculairement à la direction de mesure (X).

11. Dispositif selon la revendication 10, caractérisé par le fait que la source lumineuse (L) présente une section transversale allongée perpendiculairement à la direction de mesure (X).

12. Dispositif selon la revendication 9, caractérisé par le fait que l'éclairage de la plaque de palpage (A) a lieu à l'aide d'un faisceau de rayons lumineux qui converge ou diverge perpendiculairement à la direction de mesure (X).

13. Dispositif selon la revendication 12, caractérisé par le fait qu'une optique d'éclairage astigmatique est prévue derrière la source lumineuse (L).

**14.** Dispositif selon la revendication 9, caractérisé par le fait que la période de division des repères (GS) de la plaque de palpage (A") varie de manière continue perpendiculairement à la direction de mesure (X).

**15.** Dispositif selon la revendication 9, caractérisé par le fait que la période de division des repères de la plaque de palpage varie perpendiculairement à la direction de mesure et qu'ainsi les repères forment une lentille cylindrique de Fresnel.

**16.** Dispositif selon la revendication 9, caractérisé par le fait que la plaque de palpage (A) est inclinée par rapport à la mesure matérialisée (M), l'axe de basculement s'étendant dans la direction de mesure (X).

**17.** Dispositif selon une des revendications précédentes, caractérisé par le fait que la mesure matérialisée (M, M') et/ou la plaque de palpage (A', A"), dans la direction de mesure (X), présente une graduation incrémentale (TA', TM'), dont les périodes de division sont constantes chaque fois.

**18.** Dispositif selon une des revendications 1 à 16, caractérisé par le fait que la mesure matérialisée (M) présente une zone de graduation (M1), dont la période de division varie de manière continue en fonction du lieu dans la direction de mesure (X).

**19.** Dispositif selon la revendication 18, caractérisé par le fait que la plaque de palpage (A), au nombre d'au moins une, comporte une zone de graduation (A1), dont la période de division varie de manière continue en fonction du lieu dans la direction de mesure (X).

**20.** Dispositif selon une des revendications précédentes, caractérisé par le fait que les repères (GS) de la plaque de palpage (A, A', A"), sont conformés de telle sorte qu'il n'y ait pas d'ordre zéro de diffraction transversale.

**21.** Dispositif selon une des revendications précédentes, caractérisé par le fait que la division (TM, TM') de la mesure matérialisée (M, M') est conformée de telle sorte qu'il n'y ait pas d'ordre zéro de diffraction longitudinale.

**22.** Dispositif selon une des revendications précédentes, caractérisé par le fait qu'au moins un élément optique (A2, M2, M3; FM, FA, C1 à C6) supplémentaire est placé sur la plaque de palpage (A) et/ou sur la règle de mesure (M), élément qui dirige un faisceau lumineux provenant de la source lumineuse (L) sur au moins un des détecteurs (D0, D+1, D-1) et agit sur au moins un signal (St, SG) dépendant de la position.

**23.** Dispositif selon la revendication 22, caractérisé par le fait que ce faisceau lumineux est limité par un diaphragme (B) disposé sur la marche du faisceau lumineux.

Fig.1

Fig.2

Fig.3

TA

A   GS   GL

M

TM

X

Fig.4

A2        A        TA        A1        A2

GS        GL

M3   M2        M        M1        M2   M3

TM

X

FIG. 5

FIG. 6

FIG. 7

FIG. 8

FIG. 10

FIG. 9

FIG. 11

L

K

A

M

A

K

B

FIG. 12

D-1    D0    D+1

I(y)

S⁻

S⁺

y

FIG. 13

FIG. 14

FIG. 17

FIG. 15

a)

RST

b)

RMT

c).

ST

P

P1

FIG. 16

a)

RSG

b(

RMG

c)

SG

P

P1